(19) Europäisches Patentamt
European Patent Office
Office européen des brevets

(11) Veröffentlichungsnummer : **0 475 981 B1**

# (12) EUROPÄISCHE PATENTSCHRIFT

(45) Veröffentlichungstag der Patentschrift :
**12.01.94 Patentblatt 94/02**

(51) Int. Cl.$^5$ : **C08F 212/04**

(21) Anmeldenummer : **90908513.6**

(22) Anmeldetag : **02.06.90**

(86) Internationale Anmeldenummer :
**PCT/EP90/00878**

(87) Internationale Veröffentlichungsnummer :
**WO 90/15086 13.12.90 Gazette 90/28**

## (54) CARBOXYLGRUPPEN UND GGF. TERTIÄRE AMINOGRUPPEN ENTHALTENDE COPOLYMERE, VERFAHREN ZU IHRER HERSTELLUNG UND IHRE VERWENDUNG IN BESCHICHTUNGSMASSEN.

Die Akte enthält technische Angaben, die nach dem Eingang der Anmeldung eingereicht wurden und die nicht in dieser Patentschrift enthalten sind.

(30) Priorität : **08.06.89 DE 3918669**

(43) Veröffentlichungstag der Anmeldung :
**25.03.92 Patentblatt 92/13**

(45) Bekanntmachung des Hinweises auf die Patenterteilung :
**12.01.94 Patentblatt 94/02**

(84) Benannte Vertragsstaaten :
**AT BE CH DE DK ES FR GB IT LI NL SE**

(56) Entgegenhaltungen :
**EP-A- 0 349 818**
**DE-A- 2 032 647**
**DE-A- 2 422 043**
**DE-A- 2 615 101**

(73) Patentinhaber : **BASF Lacke + Farben AG**
**Glasuritstrasse 1**
**D-48165 Münster-Hiltrup (DE)**

(72) Erfinder : **HOFFMANN, Peter**
**Grevener Strasse 389**
**D-4400 Münster (DE)**
Erfinder : **JUNG, Werner, Alfons**
**Uhrwerkerstrasse 82**
**D-4715 Ascheberg (DE)**

(74) Vertreter : **Münch, Volker, Dr. et al**
**BASF Lacke + Farben AG**
**Patente/Lizenzen/Dokumentation Postfach 61 23**
**D-48136 Münster (DE)**

EP 0 475 981 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft in organischen Lösungsmitteln lösliche, Carboxyl- und ggf. tertiäre Aminogruppen enthaltende Copolymere, Verfahren zu ihrer Herstellung sowie ihre Verwendung in Beschichtungsmassen.

Carboxylgruppen und ggf. tertiäre Aminogruppen enthaltende Copolymere sowie ihre Verwendung in Beschichtungsmassen sind bekannt (vgl. beispielsweise EP-A-103199, EP-B 51275, EP-A-123793, DE-OS 2635177, JP-OS 76338/77 und WO 87/02041).

Bekannt ist weiterhin, daß Probleme bei der Herstellung von Acrylatcopolymerisaten auftreten, wenn Monomere mit im Vergleich zu Acrylatmonomeren stark unterschiedlicher Reaktivität, wie z.B. Vinylester von in $\alpha$ -Stellung verzweigten, aliphatischen Monocarbonsäuren mit 5 bis 15 C-Atomen, eingesetzt werden. In diesen Fällen gelingt es schwer, einheitliche, d.h. statistisch homogen verteilte Copolymere zu erhalten.

Eine Lösungsmöglichkeit dieses Problems ist das in der US-PS 4,039,734 beschriebene Verfahren zur Copolymerisation unterschiedlich reaktiver Monomerer, bei dem wenigstens ein Teil des reaktiven Monomers in solch einer Menge kontinuierlich zu der Reaktionsmischung hinzugegeben wird, daß das relative Monomerenverhältnis konstant bleibt. Die hierfür jeweils erforderliche Monomerenmenge wird mit Hilfe der frei werdenden Reaktionswärme ermittelt.

Bei dem in der DE-PS 20 32 647 beschriebenen Verfahren werden einheitliche Vinylester-, Vinylaromat und Hydroxiacrylat-Copolymere entsprechend durch stufenweise Zugabe der einzelnen Monomeren erhalten. Bei diesem Verfahren wird die Gesamtmenge Vinylester zusammen mit 5 bis 15 Gew.-% der Gesamtmenge des Vinylaromaten und der Gesamtmenge der anderen hydroxifunktionellen Monomeren und ungesättigten Carbonsäuren vorgelegt. Die restliche Monomerenmenge wird dann entweder als Ganzes allmählich zugefügt oder aber so zudosiert, daß der Zulauf der OH- und COOH-Monomeren zeitlich länger dauert als der Vinylaromatenzulauf. Nachteilig bei diesem Verfahren sind der sehr hohe Restmonomerengehalt (d.h. die Menge nicht umgesetztes Ausgangsmonomer, ausgedrückt in Gew.-%, bezogen auf die ursprünglich eingesetzte Gesamtmenge dieses Monomers) von bis zu 40 Gew.-% an Vinylester bei Verwendung eines hohen Vinylaromatenanteils von bis zu 50 Gew.-% und die damit verbundenen Toxizitäts-Probleme. Weiterhin ungünstig im Hinblick auf die Lösemittelbelastung der Umgebung beim Trocknen der Lackfilme ist der durch die hohe Viskosität der Bindemittellösungen verursachte hohe Lösungsmittelanteil der Beschichtungsmittel. Zusätzlich besteht die Gefahr von Trübungserscheinungen bei Polymerlösungen mit höherem Festkörpergehalt, die nur durch Zugabe weiteren Lösungsmittels beseitigt werden können.

Auch die englischsprachige technische Information "VeoVa polymers LR-40 and LR-2041 for water-thinnable paints" der Firma Shell beschreibt derartige Vinylester, Vinylaromat und Hydroxialkylester enthaltende Copolymere, die allerdings ebenfalls die gerade oben genannten Nachteile aufweisen.

Schließlich sind auch einige Massenpolymerisationsverfahren zur Herstellung von Vinylester enthaltenden Copolymeren bekannt, bei denen ebenfalls die Gesamtmenge des Vinylesters, ggf. mit einem Teil der Gesamtmenge der anderen Monomeren und ggf. Initiator erhitzt wird und dann die übrige Menge an Monomeren und Initiator allmählich zugesetzt wird (vgl. z.B. DE-PS 24 22 043 und DE-OS 26 15 101). Bei diesen Verfahren gelingt es zwar, den Vinylester vollständig einzubauen (Restmonomerengehalt <10 Gew.-%), jedoch sind die so erhaltenen Copolymerlösungen nach dem Anlösen der Polymermasse trübe und für Lackformulierungen nicht geeignet.

Weiterhin sind aus der nicht vorveröffentlichten DE-OS 38 23 005 hydroxylgruppenhaltige Copolymere bekannt, die durch Lösungspolymerisation von Vinylestern, Vinylaromaten, Hydroxialkylestern $\alpha,\beta$-ungesättigter Säuren und ggf. weiteren ungesättigten Monomeren herstellbar sind, die einen niedrigen Restmonomerengehalt aufweisen und die zu klaren Copolymerlösungen führen.

Schließlich sind aus der ebenfalls nicht vorveröffentlichten DE-OS 38 27 587 aminogruppenhaltige Copolymerisate bekannt, die durch Lösungspolymerisation von Vinylestern, Vinylaromaten, Alkylestern $\alpha,\beta$-ungesättigter Sauren und ggf. weiteren ungesättigten Monomeren sowie anschließende Aminolyse herstellbar sind, ebenfalls einen niedrigen Restmonomerengehalt aufweisen und klare Lösungen geringer Viskosität ergeben.

Der Erfindung lag somit die Aufgabe zugrunde, Carboxyl- und ggf. tertiäre Aminogruppen enthaltende Copolymere zur Verfügung zu stellen, die unter Verwendung von preisgünstigen und leicht verfügbaren Rohstoffen herstellbar sind, die einen niedrigen Restmonomerengehalt (<10 Gew.-%) von Vinylester Monomeren aufweisen und die klare Lösungen ergeben. Insbesondere sollten die erhaltenen Lösungen der carboxylgruppenhaltigen Copolymeren eine möglichst niedrige Viskosität aufweisen. Die unter Verwendung dieser Copolymeren hergestellten Beschichtungsmittel sollten entsprechend bei einer für die Verarbeitung günstigen Viskosität von 16 bis 20 s, gemessen im Auslaufbecher nach DIN 4 bei 23°C, einen möglichst hohen Festkörpergehalt aufweisen und zu Überzügen mit guten technologischen Eigenschaften, insbesondere guter Härte und Benzinbeständigkeit führen.

Überraschenderweise wird diese Aufgabe durch carboxylgruppenhaltige Copolymere mit einer Säurezahl

von mehr als 30 bis 150 mg KOH/g und einem zahlenmittleren Molekulargewicht von 2000 bis 8000 gelöst, die dadurch gekennzeichnet sind, daß sie herstellbar sind, indem

A) mittels radikalischer Lösungspolymerisation unter Verwendung von Polymerisationsinitiatoren bei Temperaturen von 130 bis 200°C aus

$a_1$) 5 bis 25 Gew.-% eines oder mehrerer Vinylester von Monocarbonsäuren,

$a_2$) 10 bis 50 Gew.-% eines oder mehrerer vinylaromatischer Kohlenwasserstoffe,

$a_3$) 5 bis 40 Gew.-% eines oder mehrerer Hydroxialkylester $\alpha$, $\beta$-ungesättigter Carbonsäuren,

$a_4$) 0 bis 40 Gew.-% carboxylgruppenhaltigen, ethylenisch ungesättigten Monomeren und/oder anderen ethylenisch ungesättigten, copolymerisierbaren Monomeren,

wobei die Summe der Gewichtsanteile der Komponenten $a_1$ bis $a_4$ jeweils 100 Gew.-% beträgt, ein hydroxylgruppen- und ggf. carboxylgruppenhaltiges Copolymer hergestellt worden ist, indem

1) mindestens 60 Gew.-% der Gesamtmenge der Komponente $a_1$ zusammen mit einem Teil der insgesamt einzusetzenden Lösungsmittelmenge vorgelegt werden,

2) die Komponenten $a_2$ bis $a_4$ und der ggf. vorhandene Rest der Komponente $a_1$ innerhalb eines für alle Komponenten gleich langen Monomerenzugabezeitraumes so zudosiert werden, daß

i) die pro Zeiteinheit zugegebene Menge der Komponente $a_1$ innerhalb des Monomerenzugabezeitraumes konstant bleibt oder abnimmt,

ii) die pro Zeiteinheit zugegebene Menge der Komponenten $a_3$ und $a_4$ innerhalb des Monomerenzugabezeitraumes konstant bleibt und

iii) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 - 40 Gew.-% und innerhalb des letzten Drittels 35 - 60 Gew.-% der Gesamtmenge der Komponente $a_2$ beträgt, wobei die Summe der Zugabemengen im 1., 2. und 3, Drittel jeweils 100 Gew.-% beträgt,

B) ggf. das in der Stufe A erhaltene Copolymer mit Carbonsäureanhydriden umgesetzt worden ist, wobei die Menge an eingesetzten Carbonsäureanhydriden so gewählt wird, daß das entstehende Copolymer eine Säurezahl von mehr als 30 bis 150 mg KOH/g aufweist.

Es ist überraschend und war nicht vorhersehbar, daß die erfindungsgemäßen carboxylgruppenhaltigen Copolymeren einen niedrigen Restmonomerengehalt an Vinylester-Monomer von <10 Gew.-%, bezogen auf die ursprünglich eingesetzte Gesamtmenge Vinylester-Monomer, aufweisen und klare Lösungen geringer Viskosität bei möglichst hohem Festkörpergehalt ergeben. Somit ist es möglich, Beschichtungsmittel unter Verwendung dieser Copolymeren herzustellen, deren Lösungsmittelgehalt möglichst niedrig ist, so daß die Lösemittelbelastung der Umgebung beim Trocknen der Lackfilme im Vergleich zu herkömmlichen Lacken auf Basis carboxylgruppenhaltiger Bindemittel/Epoxy-Härter reduziert ist. Schließlich zeichnen sich die unter Verwendung dieser Copolymeren hergestellten Beschichtungsmittel durch gute technologische Eigenschaften der resultierenden Beschichtung, insbesondere gute Härte und Benzinbeständigkeit, aus.

Im folgenden werden nun zunächst die Herstellung des hydroxyl- und ggf. carboxylgruppenhaltigen Copolymers und die hierzu eingesetzten Komponenten $a_1$ bis $a_4$ näher erläutert.

Als Komponente $a_1$ werden Vinylester von Monocarbonsäuren, bevorzugt Vinylester von in $\alpha$-Stellung verzweigten Monocarbonsäuren mit 5 bis 15 C-Atomen je Molekül, eingesetzt. Die verzweigten Monocarbonsäuren können erhalten werden durch Umsetzen von Ameisensäure oder Kohlenmonoxid und Wasser mit Olefinen in Anwesenheit eines flüssigen, stark sauren Katalysators; die Olefine können Crackprodukte von paraffinischen Kohlenwasserstoffen, wie Mineralölfraktionen sein und können sowohl verzweigte wie geradkettige acyclische und/- oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppe vorwiegend an einem quaternären Kohlenstoffatom sitzt. Andere olefinische Ausgangsstoffe sind z.B. Propylentrimer, Propylentetramer und Diisobutylen. Die Vinylester können auch auf an sich bekannte Weise aus den Säuren hergestellt werden, z.B. indem man die Säuren mit Acetylen reagieren läßt.

Besonders bevorzugt werden - wegen der guten Verfügbarkeit - Vinylester von gesättigten aliphatischen Monocarbonsäuren mit 9 - 11 C-Atomen, die am $\alpha$-C-Atom verzweigt sind. Besonders bevorzugt ist außerdem der Vinylester der p-Tertiärbutyl-benzoesäure. Beispiele für weitere, geeignete Vinylester sind Vinylacetat und Vinylpropionat.

Die Menge der Komponenten $a_1$ beträgt 5 bis 25 Gew.-%, bevorzugt 10 bis 19 Gew.-%.

Die Komponente $a_2$ ist eine monovinylaromatische Verbindung. Vorzugsweise enthält sie 8 bis 9 Kohlenstoffatome je Molekül. Beispiele für geeignete Verbindungen sind Styrol, Vinyltoluole,$\alpha$-Methylstyrol, Chlorstyrole, o-, m- oder p-Methylstyrol 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt. Die Menge an Komponente $a_2$ beträgt 10 bis 50 Gew.-%, bevorzugt 20 bis 45 Gew.-%.

Als Komponente $a_3$ kommen Hydroxialkylester $\alpha$,$\beta$-ungesättigter Carbonsäuren mit primären oder sekundären Hydroxylgruppen in Frage. Vorwiegend werden Hydroxialkylester mit primären Hydroxylgruppen eingesetzt, da sie in der polymeranalogen Reaktion mit dem Carbonsäureanhydrid eine höhere Reaktivität aufweisen. Selbstverständlich können auch Mischungen von Hydroxialkylestern mit primären Hydroxylgruppen und Hydroxialkylester mit sekundären Hydroxylgruppen verwendet werden, beispielsweise wenn man Hydroxylgruppen im carboxylgruppenhaltigen Copolymer benötigt, z.B. für die Einstellung der Verträglichkeit des carboxylgruppenhaltigen Copolymers.

Beispiele für geeignete Hydroxialkylester α,β-ungesättigter Carbonsäuren mit primären Hydroxylgruppen sind Hydroxiethylacrylat, Hydroxipropylacrylat, Hydroxibutylacrylat, Hydroxiamylacrylat, Hydroxihexylacrylat, Hydroxioctylacrylat und die entsprechenden Methacrylate. Als Beispiele für verwendbare Hydroxialkylester mit einer sekundären Hydroxylgruppe seien 2-Hydroxipropylacrylat, 2-Hydroxibutylacrylat, 3-Hydroxibutylacrylat und die entsprechenden Methacrylate genannt.

Selbstverständlich können jeweils auch die entsprechenden Ester anderer, α,β-ungesättigter Carbonsäuren wie z.B. der Crotonsäure und der Isocrotonsäure eingesetzt werden.

Vorteilhafterweise kann die Komponete $a_3$ zumindest teilweise ein Umsetzungsprodukt aus einem Mol Hydroxiethylacrylat und/oder Hydroxiethylmethacrylat und durchschnittlich zwei Mol ε-Caprolacton sein.

Als Komponente $a_3$ kann zumindest teilweise auch ein Umsetzungsprodukt aus Acrylsäure und/oder Methacrylsäure mit dem Glycidylester einer Carbonsäure mit einem tertiären α-Kohlenstoffatom eingesetzt werden. Glycidylester stark verzweigter Monocarbonsäuren sind unter dem Handelsnamen "Cardura" erhältlich. Die Umsetzung der Acrylsäure oder Methacrylsäure mit dem Glycidylester einer Carbonsäure mit einem tertiären α-Kohlenstoffatom kann vor, während oder nach der Polymerisationsreaktion erfolgen.

Die Komponente $a_3$ wird in einer Menge von 5 bis 40 Gew.-%, bevorzugt 15 bis 35 Gew.-%, eingesetzt.

Zum Aufbau des hydroxyl- und ggf. carboxylgruppenhaltigen Copolymers können außerdem 0 bis 40 Gew.-% carboxylgruppenhaltige Monomere und/oder andere, ethylenisch ungesättigte copolymerisierbare Monomere eingesetzt werden.

Beispiele für geeignete carboxylgruppenhaltige Monomere sind ungesättigte Carbonsäuren wie z.B. Acryl-, Methacryl-, Itacon-, Croton-, Isocroton-, Aconit-, Malein- und Fumarsäure, Halbester der Malein- und Fumarsäure sowie β- Carboxiethylacrylat und Addukte von Hydroxialkylestern der Acrylsäure und/oder Methacrylsäure mit Carbonsäureanhydriden wie z.B. der Phthalsäure-mono-2-methacryloyloxiethylester.

Die Auswahl der anderen, ethylenisch ungesättigten Monomeren ist nicht besonders kritisch. Es ist aber darauf zu achten, daß der Einbau dieser Monomeren nicht zu unerwünschten Eigenschaften des Copolymerisats führt. So richtet sich die Auswahl der Komponente $a_4$ weitgehend nach den gewünschten Eigenschaften der härtbaren Zusammensetzung in bezug auf Elastizität, Härte, Verträglichkeit und Polarität.

Bevorzugt werden als Komponente $a_4$ Alkylester von olefinisch ungesättigten Carbonsäuren eingesetzt. Beispiele hierfür sind Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Octadecenyl (meth)acrylat sowie die entsprechenden Ester der Malein-, Fumar-, Tetrahydrophthal-, Croton-, Isocroton-, Vinylessig- und Itaconsäure.

Geeignet als Komponente $a_4$ sind weiterhin andere ethylenisch ungesättigte Verbindungen, wie beispielsweise Alkoxiethylacrylate, Aryloxiethylacrylate und die entsprechenden Methacrylate, wie z.B. Butoxiethyl(meth)acrylat, Phenoxiethyl(meth)acrylat; ungesättigte Verbindungen mit tertiären Aminogruppen, wie z.B. N,N'-Diethylaminoethylmethacrylat, 2-Vinylpyridin, 4-Vinylpyridin, Vinylpyrrolin, Vinylchinolin, Vinylisochinolin, N,N'-Dimethylaminoethylvinylether und 2-Methyl-5-vinylpyridin; Verbindungen wie z.B. Acrylnitril, Methacrylnitril, Acrolein und Methacrolein.

Die Polymerisation der Monomerkomponenten $a_1$ bis $a_4$ wird vorzugsweise unter Ausschluß von Sauerstoff, z.B. durch Arbeiten in einer Stickstoff-Atmosphäre, durchgeführt. Der Reaktor ist mit entsprechenden Rühr-, Heiz- und Kühleinrichtungen sowie mit einem Rückflußkühler, in dem flüchtige Bestandteile, wie z.B. Styrol, zurückgehalten werden, ausgerüstet.

Die Polymerisationsreaktion wird bei Temperaturen von 130 bis 200°C, bevorzugt 150 bis 180°C, unter Verwendung von Polymerisationsinitiatoren und ggf. Polymerisationsreglern durchgeführt.

Geeignete radikalische Initiatoren sind organische Peroxide, wie z.B. Dibenzoylperoxid, Dicumylperoxid, Cumolhydroperoxid, Di-tert.-butylperoxid, tert.-Butylamylperoxid, tert.-Butylhydroperoxid, 2,2- Ditert.-butylperoxybutan, tert.- Amylperbenzoat, 1,3-Bis(tert.-butylperoxyisopropyl)- benzol, Diisopropylbenzolmonohydroperoxid und Diacylperoxide, wie z.B. Diacetylperoxid, Peroxiketal, wie z.B. 2,2-Di(tert.-amylperoxi)-propan und Ethyl-3,3-di-(tert.-amylperoxi)-butyrat, thermolabile hochsubstituierte Ethanderivate, beispielsweise auf Basis silylsubstituierter Ethanderivate und auf Basis Benzpinakol. Weiterhin können auch aliphatische Azoverbindungen, wie beispielsweise Azobiscyclohexannitril, eingesetzt werden.

Die Initiatormenge beträgt in den meisten Fällen 0,1 bis 5 Gew.-%, bezogen auf die zu verarbeitende Monomerenmenge, sie kann ggf. aber auch höher liegen. Der Initiator, gelöst in einem Teil des für die Polymerisation eingesetzten Lösungsmittels, wird allmählich während der Polymerisationsreaktion zudosiert. Bevorzugt dauert der Initiatorzulauf etwa 1 bis 2 Stunden länger als der Monomerenzulauf, um so auch eine gute Wirkung während der Nachpolymerisationsphase zu erzielen. Werden Initiatoren mit nur einer geringen Zerfallsrate, d. h. lange Halbwertszeit unter den vorliegenden Reaktionsbedingungen eingesetzt, so ist es auch möglich, den Initiator vorzulegen.

Bevorzugt wird die Reaktion in Gegenwart von Polymerisationsreglern durchgeführt, da so Trübungen der Polymerlösungen besser vermieden werden können. Als Regler eignen sich vorzugsweise Mercaptoverbindungen, wobei besonders bevorzugt Mercaptoethanol eingesetzt wird. Andere mögliche Regler sind beispielsweise Alkylmercaptane, wie z.B. t-Dodecylmercaptan, Octylmercaptan, Phenylmercaptan, Octyldecylmercaptan, Butylmercaptan, Thiocarbonsäuren, wie etwa Thioessigsäure oder Thiomilchsäure.

Diese Regler werden in einer Menge von bis zu 2 Gew.-%, bezogen auf die zu verarbeitende Monomerenmenge, eingesetzt. Vorzugsweise werden sie in einem der Monomerenzuläufe gelöst und mit den Monomeren zugegeben. Bevorzugt ist die zugegebene Reglermenge zeitlich konstant.

Die Polymerisation wird in einem hochsiedenden, organischen, gegenüber den eingesetzten Monomeren und gegenüber Carbonsäureanhydriden inerten, Lösungsmittel durchgeführt. Bevorzugt liegt der Polymerisationsfestkörper bei mindestens 60 Gew.-%, besonders bevorzugt zwischen 60 und 90 Gew.-%, bezogen auf das Gesamtgewicht der Reaktionsmischung. Beispiele für geeignete Lösungsmittel sind Glykolether wie z. B. Diglykoldimethylehter; höher substituierte Aromaten wie z. B. Solvent Naphta®, Schwerbenzol, verschiedene Solvesso®-Typen, verschiedene Shellsol®-Typen und Deasol sowie höhersiedende alpihatische und cycloaliphatische Kohlenwasserstoffe wie z. B. verschiedene Testbenzine, Mineralterpentinöl, Tetralin und Dekalin.

Es ist erfindungswesentlich, daß die Copolymerisation der Komponenten $a_1$ bis $a_4$ folgendermaßen durchgeführt wird:

In dem Reaktor werden zunächst mindestens 60 % Gew.-%, bevorzugt 100 Gew.-%, der insgesamt einzusetzenden Menge der Komponente $a_1$ zusammen mit einem Teil der insgesamt einzusetzenden Lösungsmittelmenge vorgelegt und auf die jeweilige Reaktionstemperatur aufgeheizt. Die restliche Menge des Lösungsmittels wird - wie bereits beschrieben - vorzugsweise zusammen mit dem Katalysator allmählich zugefügt. Die ggf. noch vorhandene restliche Menge der Komponente $a_1$ sowie die übrigen Monomeren (Komponenten $a_2$, $a_3$ und $a_4$) werden innerhalb eines für alle Komponenten gleich langen Monomerenzugabezeitraumes (beträgt i.a. 2 - 10 h, wie für Acrylatcopolymerisationen üblich) zu der vorgelegten Komponente $a_1$ folgendermaßen zudosiert:

i) Die pro Zeiteinheit zugegebene Menge der ggf. noch vorhandenen Komponente $a_1$ (d.h. die Restmenge der Komponente $a_1$, die nicht vorgelegt wurde) bleibt innerhalb des Monomerenzugabezeitraumes konstant oder nimmt ab, wobei die letzte Verfahrensvariante bevorzugt ist. Im Fall einer konstanten Zugabemenge wird die Komponente $a_1$ bevorzugt zusammen mit den Komponenten $a_3$ und $a_4$ zudosiert.

ii) Die pro Zeiteinheit zugegebene Menge der Komponenten $a_3$ und $a_4$ bleibt innerhalb des Monomerenzugabezeitraumes konstant.

iii) Die pro Zeiteinheit zugegebene Menge der Komponente $a_2$ wird innerhalb des Monomerenzugabezeitraumes so variiert, daß die innerhalb des ersten Drittels des Monomerenzugabezeitraumes insgesamt zugegebene Menge der Komponente $a_2$ 15 bis 30 Gew.-%, bevorzugt 18 bis 26 Gew.-%, der Gesamtmenge der Komponente $a_2$ beträgt. Innerhalb des zweiten Drittels des Monomerenzugabezeitraumes werden insgesamt 25 bis 40 Gew.-%, bevorzugt 30 bis 38 Gew.-% und innerhalb des letzten Drittels des Monomerenzugabezeitraumes werden 35 bis 60 Gew.-%, bevorzugt 40 bis 50 Gew.-%, der Gesamtmenge der Komponente $a_2$ zudosiert, wobei selbstverständlich die Summe der Zugabemengen im 1., 2. und 3. Drittel 100 Gew.-% beträgt.

Für die Variation der pro Zeiteinheit zugegebenen Menge der Komponente $a_2$ bestehen verschiedene Möglichkeiten, entscheidend ist nur, daß die oben angegebenen, im jeweiligen Drittel insgesamt zugegebenen Mengen eingehalten werden. So besteht beispielsweise die Möglichkeit einer stufenweisen Veränderung der pro Zeiteinheit zugegebenen Menge der Komponente $a_2$. Die Zahl der Stufen, bei denen die Zugabemenge jeweils geändert wird, kann beliebig gewählt werden. So kann beispielsweise die Zugabemenge pro Zeiteinheit der Komponente $a_2$ nur zu Beginn des zweiten und/oder zu Beginn des dritten Drittels erhöht werden. Innerhalb des Drittels bleibt die Zugabemenge pro Zeiteinheit dann jeweils konstant. Es ist aber auch möglich, die pro Zeiteinheit zugegebene Menge der Komponente $a_2$ kontinuierlich zu verändern, entsprechend dem Grenzfall einer unendlichen Stufenzahl.

Die Zugabe der Komponenten in der genannten Weise fördert, wie angenommen wird, die Copolymerisation und reduziert die Homopolymerisation der Einzelkomponenten. Zusätzlich werden Copolymerisate mit einem sehr niedrigen Restmonomerengehalt erhalten, die klare Lösungen mit einem hohen Festkörpergehalt

ergeben.

Die so erhaltenen ggf. carboxylgruppenhaltigen Copolymeren weisen bevorzugt ein mittleres Molekulargewicht von 1500 bis 8000 (Zahlenmittel) und eine OH-Zahl von 30 bis 200 mg KOH/g, bevorzugt 70 bis 150 mg KOH/g auf. Die so erhaltenen hydroxylgruppenhaltigen und ggf. carboxylgruppenhaltigen Copolymere werden dann in einem zweiten Schritt mit Carbonsäureanhydriden zu den entsprechenden carboxylgruppenhaltigen Copolymeren umgesetzt. Die Menge an eingesetztem Carbonsäureanhydrid wird dabei so gewählt, daß das resultierende Copolymer eine Säurezahl von mehr als 30 bis 150 mg KOH/g, bevorzugt mehr als 30 bis 90 mg KOH/g, und eine OH-Zahl von 0 bis 60 mg KOH/g aufweist. Das zahlenmittlere Molekulargewicht des carboxylgruppenhaltigen Copolymers B beträgt 2000 bis 8000.

Neben dieser bevorzugten Variante, zumindest einen Teil der Carboxylgruppen des Copolymers durch Addition von Carbonsäureanhydriden an hydroxylgruppenhaltige Copolymere (erhalten in Stufe A) einzuführen, besteht selbstverständlich auch die Möglichkeit, die Carboxylgruppen durch Einsatz entsprechender Mengen carboxylgruppenhaltiger Monomerer als Komponente $a_4$ direkt bei der Polymerisation in das Copolymer einzubauen.

Für die Addition an die hydroxylgruppenhaltigen Copolymeren geeignete Carbonsäureanhydride sind die Anhydride von aliphatischen, cycloaliphatischen und aromatischen gesättigten und/oder ungesättigten Di- und Polycarbonsäuren wie beispielsweise die Anhydride der Phthalsäure, Tetrahydrophthalsäure, Hexahydrophthalsäure, Bernsteinsäure, Malein- säure, Itaconsäure, Glutarsäure, Trimellithsäure und Pyromellithsäure sowie deren halogenierte oder alkylierte Derivate.

Bevorzugt eingesetzt werden Anhydride der Phthalsäure, Tetrahydro- und Hexahydrophthalsäure sowie 5-Methylhexahydrophthalsäureanhydrid.

Die Umsetzung der hydroxylgruppenhaltigen Copolymeren mit den Carbonsäureanhydriden erfolgt bei Temperaturen von 100 bis 140°C in Gegenwart eines Katalysators, wie beispielsweise tertiären Aminen.

Enthalten die hydroxylgruppenhaltigen Copolymerisate dagegen tertiäre Aminogruppen - beispielsweise durch Verwendung von Monomeren mit tertiären Aminogruppen oder durch vorangegangene Umsetzung der hydroxylgruppenhaltigen Copolymerisate mit Verbindungen C, die pro Molekül durchschnittlich 0,8 bis 1,5, vorzugsweise 1, freie Isocyanatgruppe und mindestens 1 tertiäre Aminogruppe enthalten -, so kann auf einen Katalysator verzichtet werden, und die Reaktion kann bei niedrigeren Temperaturen von 50 bis 130°C durchgeführt werden.

Besonders vorteilhaft ist es, wenn in das carboxylgruppenhaltige Copolymer tertiäre Aminogruppen eingebaut werden, da sie eine nachfolgende Vernetzung des Carboxylgruppen enthaltenden Polymerisats mit Epoxidgruppen katalysieren und so die Einbrenntemperaturen von Beschichtungsmitteln auf Basis dieser Polymerisate erniedrigt werden.

Enthält das Copolymer tertiäre Aminogruppen, muß bei der Addition von ungesättigten Carbonsäureanhydriden, wie z. B. bei der Addition von Maleinsäureanhydrid, darauf geachtet werden, daß keine Lösungsmittel eingesetzt werden, die unter Katalyse der tertiäten Stickstoffgruppen mit dem ungesättigten Carbonsäureanhydrid reagieren. Nicht verwendbar sind daher beispielsweise Aceton, Methylethylketon, Butylacetat sowie andere acetylierende Lösungsmittel. Verwendet werden können Kohlenwasserstoffe und polare Lösungsmittel wie Dimethylformamid, Dimethylacetamid, n-Methylpyrrolidon etc.

Bevorzugt werden die tertiären Aminogruppen durch Umsetzen des hydroxyl- und carboxylgruppenhaltigen Polymerisats B mit Verbindungen C, die pro Molekül durchschnittlich 0,8 bis 1,5, vorzugsweise 1, freie Isocyanatgruppe und mindestens 1 tertiäre Aminogruppe enthalten, eingeführt. Es ist aber auch möglich, das hydroxylgruppenhaltige Copolymerisat zunächst mit den Verbindungen C umzusetzen und dann erst die Carboxylgruppen durch Umsetzen mit einem Carbonsäureanhydrid in das Copolymer einzuführen. In diesem Fall kann - wie bereits ausgeführt - die Umsetzung mit dem Anhydrid bei niedrigeren Temperaturen erfolgen.

Die Menge der Verbindung C wird dabei so gewählt, daß das entstehende Harz eine Aminzahl von 0 bis 50 mg KOH/g aufweist. Sollen die Copolymerisate in Beschichtungsmitteln eingesetzt werden, die bei Raumtemperatur gehärtet werden, wird eine höhere Aminzahl von 10 bis 40 mg KOH/g eingestellt.

Die zur Einführung der tertiären Aminogruppe verwendeten Verbindungen C werden hergestellt, indem Diisocyanate oder Polyisocyanate mit einem stöchiometrischen Unterschuß an einem tertiären Amin umgesetzt werden. Geeignet für diese Umsetzung sind tertiäre Amine der allgemeinen Formel $NR_1R_2R_3$, wobei $R_1$ bevorzugt einen Alkanolrest oder einen anderen hydroxylgruppenhaltigen Rest bedeutet und $R_2$ bzw. $R_3$ Alkyl- oder Cycloalkylreste darstellen können. Bevorzugt sind Dialkylalkanolamine, wie z.B. Dimethylethanolamin, Diethylethanolamin sowie deren höhere Homologe bzw. Isomere.

Als Di- oder Polyisocyanate sind beispielsweise geeignet:

Aromatische Isocyanate, wie z.B. 2,4-, 2,6-Toluylendiisocyanat und deren Gemische, 4,4'-Diphenylmethandiisocyanat, m-Phenylen-, p-Phenylen-, 4,4'-Diphenyl-, 1,5-Naphthalin-, 1,4-Naphthalin, 4,4'-Toluidin-, Xylylendiisocyanat sowie substituierte aromatische Systeme, wie z.B. Dianisidindiisocyanate, 4,4'-Diphenyletherdiisocyanate oder Chlorodiphenylendiisocyanate und höherfunktionelle aromatische Isocyanate, wie z.B. 1,3,5-Triisocyanatobenzol, 4,4' ,4"-Triisocyanattriphenylmethan, 2,4,6-Triisocyanatotoluol und 4,4'-Diphenyldimethylmethan-2,2', 5,5'-tetraisocyanat; cycloaliphatische Isocyanate, wie z.B. 1,3-Cyclopentan-, 1,4-Cyclohexan-, 1,2-Cyclohexan- und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Trishexamethylentriisocyanat.

Vorzugsweise werden Diisocyanate mit unterschiedlich reaktiven Isocyanatgruppen eingesetzt, wie z.B. Isophorondiisocyanat.

Die Umsetzung zwischen dem Amin und dem Isocyanat erfolgt bei Temperaturen von 0 bis 80°C, vorzugsweise von 20 bis 50°C. Die Mengenverhältnisse der Reaktionspartner werden so gewählt, daß die gebildete Verbindung C 0,8 bis 1,5, vorzugsweise 1, freie Isocyanatgruppen enthält.

Gegenstand der vorliegenden Erfindung ist auch ein Verfahren zur Herstellung von carboxylgruppenhaltigen Copolymeren mit einer Säurezahl von mehr als 30 bis 150 mg KOH/g und einem zahlenmittleren Molerkulargewicht von 2000 bis 8000 nach einem der Ansprüche 1 bis 9, das dadurch gekennzeichnet ist, daß die Monomeren $a_1$ bis $a_4$ unter Verwendung von Polymerisationsinitiatoren bei Temperaturen von 130 bis 200°C zu einem hydroxyl- und ggf. carboxylgruppenhaltigen Copolymer umgesetzt werden, wobei die Copolymerisation derart durchgeführt wird, daß

I. mindestens 60 Gew.-% der Gesamtmenge der Komponente $a_1$ zusammen mit einem Teil der insgesamt einzusetzenden Lösungsmittelmenge vorgelegt werden,

II. die Komponenten $a_2$ bis $a_4$ und der ggf. vor handene Rest der Komponente $a_1$ innerhalb eines für alle Komponenten gleich langen Monomerenzugabezeitraumes so zudosiert werden, daß

1) die pro Zeiteinheit zugegebene Menge der Komponente $a_1$ innerhalb des Monomerenzugabezeitraumes konstant bleibt oder abnimmt,

2) die pro Zeiteinheit zugegebene Menge der Komponenten $a_3$ und $a_4$ innerhalb des Monomerenzugabezeitraumes konstant bleibt und

3) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 bis 40 Gew.-% und innerhalb des letzten Drittels 35 bis 60 Gew.-% der Gesamtmenge der Komponente $a_2$ betägt, wobei die Summe der Zugabemengen im 1., 2. und 3. Drittel jeweils 100 Gew.-% beträgt und

B) ggf. das in der Stufe A erhaltene Copolymer mit Carbonsäureanhydriden umgesetzt wird, wobei die Menge an eingesetzten Carbonsäureanhydriden so gewählt wird, daß das entstehende Copolymer eine Säurezahl von mehr als 30 bis 150 mg KOH/g aufweist.

Die in diesem Verfahren einsetzbaren Komponenten $a_1$ bis $a_4$ sowie die Durchführung des erfindungsgemäßen Verfahrens sind bereits ausführlich im Zusammenhang mit den erfindungsgemäßen carboxygruppenhaltigen Copolymeren beschrieben, so daß hier nur auf die Seiten 7 bis 18 der vorliegenden Beschreibung verwiesen wird.

Gegenstand der vorliegenden Erfindung sind weiterhin Beschichtungsmittel, die die erfindungsgemäßen Carboxylgruppen und ggf. tertiäre Aminogruppen enthaltenden Copolymeren als Bindemittelkomponente enthalten. Als Härterkomponente werden Verbindungen, die mindestens zwei Epoxidgruppen pro Molekül enthalten, eingesetzt. Das Verhältnis von carboxylgruppenhaltigen Copolymer zu Epoxidverbindung wird in diesen Beschichtungsmitteln so gewählt, daß das Verhältnis der Säuregruppen des Copolymers zu den Epoxidgruppen des Epoxid-Härters im Bereich von 0,3:1 bis 3:1 liegt. Ggf. wird ein Vernetzungskatalysator verwendet.

Beispiele für Verbindungen mit mindestens zwei Epoxidgruppen pro Molekül sind Kondensationsprodukte aus Epichlorhydrin und Bisphenol A, cycloaliphatische Bisepoxide, die den Formeln (I) und (II) entsprechen:

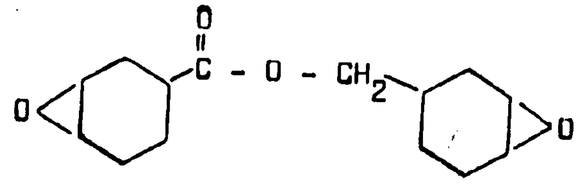

(I)

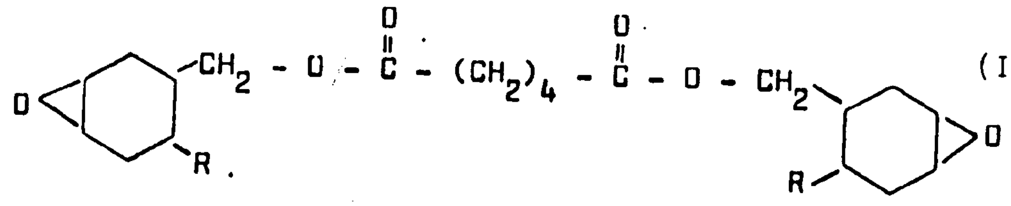

(II)

R = H, $CH_3$

sowie epoxidierte Polybutadiene, die durch Reaktion von handelsüblichen Polybutadienölen mit Persäuren bzw. organischen Säure-$H_2O_2$-Mischungen entstehen, epoxidgruppenhaltige Novolake, Glycidylether eines mehrwertigen Alkohols, z.B. Ethylenglykoldiglycidylether, Glycerinpolyglycidylether, Sorbitolpolyglycidylether, Trimethylolpropanpolyglycidylether und Pentaerythritpolyglycidylether und niedermolekulare Acrylatharze mit seitenständigen Oxirangruppen.

Ggf. kann ein Vernetzungskatalysator verwendet werden. Hierbei eignen sich besonders tertiäre Amine, quartäre Ammoniumverbindungen, wie z.B. Benzyltrimethylammoniumhydroxid und Benzyltrimethylammoniumchlorid, spezielle Chromverbindungen sowie Zinnverbindungen. Selbstverständlich erübrigt sich der Einsatz eines Vernetzungskatalysators in den meisten Fällen, bei denen bereits tertiäre Aminogruppen in das Acrylatcopolymerisat eingebaut sind. Durch den Einsatz eines internen oder externen Vernetzungskatalysators werden tiefere Einbrenntemperaturen und kürzere Einbrennzeiten erreicht. Vorzugsweise wird der Vernetzungskatalysator in einer Menge von 0,5 bis 10 Gew.-%, bezogen auf das Gewicht der Di- bzw. Polyepoxidkomponente, verwendet.

Die erfindungsgemäßen Beschichtungsmittel können außerdem noch übliche Pigmente und Füllstoffe in üblichen Mengen, bevorzugt 0 bis 60 Gew.-%, bezogen auf die Gesamtzusammensetzung, sowie weitere übliche Hilfs- und Zusatzstoffe wie z.B. Verlaufsmittel, Silikonöle, Weichmacher wie Phosphorsäureester und Phthalsäureester, viskositätskontrollierende Zusätze, Mattierungsmittel, UV-Absorber und Lichtschutzmittel in üblichen Mengen, bevorzugt 0,2 bis 10 Gew.-%, bezogen auf die Gesamtzusammensetzung, enthalten.

Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die erfindungsgemäßen Beschichtungsmittel eignen sich - wenn durch entsprechende Wahl der Härterkomponente niedrige Härtungstemperaturen zwischen 20 und 80 °C angewandt werden können (s.o.) - für die Reparaturlackierung von Kraftfahrzeugen sowie insbesondere für die Verwendung als Grundierung und Füllermaterial.

Die Erfindung betrifft auch die Verwendung der carboxylgruppenhaltigen Copolymere als Bindemittel in Klarlacken oder pigmentierten Decklacken.

Die Erfindung wird in den folgenden Beispielen näher erläutert. Alle Angaben über Teile und Prozentsätze sind Gewichtsangaben, falls nicht ausdrücklich etwas anderes festgestellt wird.

## Beispiel 1

In einem 4-Liter-Edelstahlkessel mit Rührer, Rückflußkühler und Zulaufeinrichtungen werden 425,75 Teile Shellsol A® (Gemisch von C3 - C4-Alkylsubstituierten Aromaten) und 400 Teile eines handelsüblichen Gemisches von Vinylestern von gesättigten aliphatischen Monocarbonsäuren mit überwiegend 10 C-Atomen, die am α- C-Atom verzweigt sind, vorgelegt und auf 170°C aufgeheizt.

In den Monomerentank I werden eingewogen und vermischt:

600,0 Teile Hydroxiethylmethacrylat
250,0 Teile n-Butylacrylat
150,0 Teile N,N'-Dimethylaminoethylmethacrylat
200,0 Teile Butylmethacrylat
4,1 Teile Triisodecylphosphit

In den Monomerentank II werden eingewogen und vermischt:

400,0 Teile Styrol

In den Initiatortank werden eingewogen und vermischt:

22,0 Teile Dicumylperoxid
66,0 Teile Shellsol A®

Der Inhalt des Monomerentanks I wird innerhalb von 4,5 Stunden gleichmäßig zudosiert. Der Inhalt des Monomerentanks II wird innerhalb von 4,5 Stunden so zudosiert, daß in den ersten 90 Minuten 100 Teile, von

der 91. bis zur 180. Minute der Gesamtlaufzeit 140 Teile und in der restlichen Zulaufzeit 160 Teile Styrol dosiert werden. Während des Zulaufs wird die Temperatur im Kessel bei 165 bis 170°C gehalten. Nach Beendigung der Zuläufe werden innerhalb von 1 Stunde nochmals

5,0 Teile Dicumylperoxid
15,0 Teile Shellsol A®

aus dem Initiatortank zu dosiert. Danach wird noch weitere 2 Stunden bei dieser Temperatur nachpolymerisiert. Danach wird mit 361 Teilen Xylol angelöst. Der nichtflüchtige Anteil (1 Stunde 130°C) dieser Copolymerlösung beträgt 70 %, die Viskosität der Lösung (50 % in Butylacetat) beträgt bei 23 °C 3,25 dPas.

Der Restgehalt an freiem Vinylester-Monomer in der Lösung wurde mittels Gaschromatographie zu 0,9 Gew.-% bestimmt. Dies entspricht einem Restmonomerengehalt von 6,4 Gew.-%, bezogen auf die Gesamtmenge an eingesetztem Vinylester-Monomer.

1325,0 Teile dieser Acrylatharzlösung werden in einen 4-Liter-Edelstahlkessel mit Rührer und Rückflußkühler eingewogen. Nach Zugabe von 221,4 Teilen Hexahydrophthalsäureanhydrid wird auf 130°C aufgeheizt und solange bei dieser Temperatur gehalten, bis die Säurezahlen in alkoholischem und in wäßrigem Medium gleich sind und bei 70-72 mg KOH/g liegen. Die Copolymerlösung wird mit 221,25 Teilen Xylol auf einen Festkörper von 65 % angelöst und mit 321,5 Teilen Sekundär-Butanol weiterverdünnt.

Der nichtflüchtige Anteil (1 Stunde 130°C) dieser Copolymerlösung 1 beträgt 55 %, die Viskosität der Lösung (50 % in Butylacetat) beträgt bei 23 °C 24,5 dPas. (ICI-Platte Kegel-Viskosität) .Das Copolymerisat weist eine Säurezahl von 70 mg KOH/g und eine Aminzahl von 24 mg/COH/g auf.

30 Teile dieser Copolymerlösung 1 werden mit 8,2 Teilen einer 60%igen Lösung (Methoxipropanol/Xylol) eines epoxidierten Acrylamidomelaminharzes mit einem Epoxidäquivalentgewicht von ca. 300 (Handelsname "LSE 4109" der Firma Monsanto) vermischt und mit 5 Teilen Methoxipropanol verdünnt.

Der so erhaltene Klarlack A wird mit einer Naßfilmstärke von 200 µm auf Glastafeln aufgezogen und dann unter den in Tabelle 1 angegebenen Bedingungen getrocknet. Die resultierenden Beschichtungen wurden dann mit den in Tabelle 1 angeführten Methoden geprüft. Die Prüfergebnisse sind in Tabelle 1 aufgeführt.

Zur Herstellung eines zweiten Klarlacks B werden 30 Teile der Copolymerlösung 1 mit 6,2 Teilen eines handelsüblichen epoxidierten Novolacs (Handelsprodukt "D.E.N. 444" der Firma Dow Chemicals) mit einem Epoxidäquivalentgewicht von 210 und einer mittleren Funktionalität von 3 bis 4 vermischt und mit 7,5 Teilen Methoxipropanol verdünnt. Dieser Klarlack B wird analog Klarlack A auf Glastafeln aufgezogen, getrocknet und analog Klarlack A die resultierende Beschichtung untersucht. Die Prüfergebnisse zeigt Tabelle 1.

Beispiel 2:

In einem 4-Liter-Edelstahlkessel mit Rührer, Rückflußkühler und Zulaufeinrichtungen werden 419,75 Teile Shellsol A® (Gemisch von C3 - C4-Alkylsubstituierten Aromaten) und 300 Teile eines handelsüblichen Gemisches von Vinylestern von gesättigten aliphatischen Monocarbonsäuren mit überwiegend 10 C-Atomen, die am $\alpha$- C-Atom verzweigt sind, vorgelegt und auf 170°C aufgeheizt.

In den Monomerentank I werden eingewogen und vermischt:

700,0 Teile Hydroxiethylmethacrylat
200,0 Teile n-Butylacrylat
200,0 Teile Methylmethacrylat
20,0 Teile Mercaptoethanol

In den Monomerentank II werden eingewogen und vermischt:

600,0 Teile Styrol

In den Initiatortank werden eingewogen und vermischt:

26,0 Teile Dicumylperoxid
78,0 Teile Shellsol A®

Der Inhalt des Monomerentanks I wird innerhalb von 4,5 Stunden gleichmäßig zudosiert. Der Inhalt des Monomerentanks II wird innerhalb von 4,5 Stunden so zudosiert, daß in den ersten 90 Minuten 100 Teile, von der 91. bis zur 180. Minute der Gesamtlaufzeit 140 Teile und in der restlichen Zulaufzeit 160 Teile Styrol dosiert werden. Während des Zulaufs wird die Temperatur im Kessel bei 165 bis 170°C gehalten. Nach Beendigung der Zuläufe werden innerhalb von 1 Stunde nochmals

5,0 Teile Dicumylperoxid
15,0 Teile Shellsol A®

aus dem Initiatortank dosiert. Danach wird noch weitere 2 Stunden bei dieser Temperatur nachpolymerisiert. Anschließend wird mit 427,3 Teilen Xylol und 427,3 Teilen 1-Methoxipropylacetat-2 angelöst. Der nichtflüchtige Anteil (1 Stunde 130°C) dieser Copolymerlösung beträgt 60 %, die Viskosität der Lösung (50 % in Butylacetat) beträgt bei 23 °C 10,80 dPas (ICI-Platte-Kegel-Viskosität).

Der Restgehalt an freiem Vinylester-Monomer in der Lösung wurde mittels Gaschromatographie zu 0,8 Gew.-% bestimmt. Dies entspricht einem Restmonomerengehalt von 8,9 Gew.-%, bezogen auf die Gesamtmenge an eingesetztem Vinylester-Monomer.

1560,0 Teile dieser Acrylatharzlösung werden in einen 4-Liter-Edelstahlkessel mit Rührer und Rückflußkühler eingewogen. Nach Zugabe von 222,7 Teilen Hexahydrophthalsäureanhydrid wird auf 130°C aufgeheizt und solange bei dieser Temperatur gehalten, bis die Säurezahlen in alkoholischem und in wäßrigem Medium gleich sind und bei 70 bis 72 mg KOH/g liegen.

Anschließend wird auf 60°C gekühlt, und es werden 296,6 Teile eines 1:1-Adduktes aus N,N'-Dimethylethanolamin und Isophorondiisocyanat sowie 12,9 Teile Dibutylzinndilaurat zugegeben. Die Temperatur wird solange bei 60 °C gehalten, bis kein freies Isocyanat mehr nachweisbar ist. Die Copolymerlösung wird mit 462,3 Teilen Sekundär-Butanol auf einen Festkörper von 50 % verdünnt. Die so erhaltene Copolymerlösung 2 hat eine Säurezahl von 63 mg KOH/g, eine Viskosität von 8,5 dPas bei 23 °C und eine Aminzahl von 24 mg KOH/g.

30 Teile dieser Copolymerlösung 2 werden mit 5,4 Teilen einer 60%igen Lösung in Methoxipropanol/Xylol eines epoxidierten Acrylamidomelaminharzes mit einem Epoxidäquivalentgewicht von ca. 300 (Handelsname "LSE 4109" der Firma Monsanto) vermischt.

Der so erhaltene Klarlack C wird analog Klarlack A auf Glastafeln aufgezogen, getrocknet und analog Klarlack A die resultierende Beschichtung untersucht. Die Prüfergebnisse zeigt Tabelle 1.

Zur Herstellung eines weiteren Klarlacks D werden 30 Teile der Copolymerlösung 2 mit 4,2 Teilen eines handelsüblichen epoxidierten Novolacs (Handelsprodukt "D.E.N. 444" der Firma Dow Chemicals) mit einem Epoxidäquivalentgewicht von 210 und einer mittleren Funktionalität von 3 bis 4 vermischt. Dieser Klarlack D wird analog Klarlack A auf Glastafeln aufgezogen, getrocknet und analog Klarlack A die resultierende Beschichtung untersucht. Die Prüfergebnisse zeigt Tabelle 1.

Tabelle 1: Prüfergebnisse

| | Lack A | Lack B | Lack C | Lack D |
|---|---|---|---|---|
| Pendelhärte (König) n.72 h Trocknung bei RT[1)] | 50 s | 71 s | - | 60 s |
| Benzintest[2)] n.7 Tagen Trocknung bei RT[1)] | 0/0 | 0/0 | - | 0/0 |
| Pendelhärte (König) nach 30'60°C Trocknung u.anschließender Lagerung von 2 h bei RT[1)] | 59 s | 67 s | 40 s | 51 s |
| Benzintest[2)] nach 30'60°C Trocknung u. anschließend. Lager. v.7 Tagen bei RT[1)] | 0,5/0 | 0/0 | 0/0 | 0/0 |
| Pendelhärte (König) n. 30'100°C Trocknung u.anschließender Lagerung von 2 h bei RT[1)] | 95 s | 112 s | 101 s | 115 s |
| Benzintest[2)] nach 30'100°C Trocknung und anschließender Lagerung von 4 h bei RT[1)] | 1/1 | 0/0 | 1/1 | 0/0 |
| 7 Tagen bei RT[1)] | 0/0 | 0/0 | 0/0 | 0/0 |

1) Raumtemperatur

2) Mit handelsüblichem Superbenzin getränkte Filzplättchen (Ø 5 cm) werden für 5 min abgedeckt auf dem Film belassen. Anschließend wird die Markierung (0 = keine Markierung; 3 = deutliche Markierung) und die Erweichung des Films (0 = keine Erweichung; 3 = deutliche Erweichung) beurteilt.

Die Beispiele 1 und 2 zeigen, daß die erhaltenen Copolymerlösungen 1 und 2 nur einen sehr geringen Restmonomergehalt an Vinylester sowie eine geringe Viskosität bei hohem Festkörpergehalt aufweisen. Somit können unter Verwendung dieser Copolymerlösungen Beschichtungsmittel mit hohem Festkörpergehalt und

damit geringer Lösemittelbelastung der Umwelt beim Trocknen der Filme hergestellt werden.

Die so hergestellten Klarlacke A bis D führen außerdem zu Beschichtungen mit guter Härte und Benzinbeständigkeit. Außerdem eignen sich diese Beschichtungsmittel aufgrund der niedrigen Vernetzungstemperaturen auch sehr gut für die Autoreparaturlackierung.

**Patentansprüche**

1. Carboxylgruppenhaltige Copolymere mit einer Säurezahl von mehr als 30 bis 150 mg KOH/g und einem zahlenmittleren Molekulargewicht von 2000 bis 8000, dadurch gekennzeichnet, daß sie herstellbar sind, indem

   A) mittels radikalischer Lösungspolymerisation unter Verwendung von Polymerisationsinitiatoren bei Temperaturen von 130 bis 200°C aus

   $a_1$) 5 bis 25 Gew.-% eines oder mehrerer Vinylester von Monocarbonsäuren,

   $a_2$) 10 bis 50 Gew.-% eines oder mehrerer vinylaromatischer Kohlenwasserstoffe,

   $a_3$) 5 bis 40 Gew.-% eines oder mehrerer Hydroxialkylester $\alpha,\beta$-ungesättigter Carbonsäuren,

   $a_4$) 0 bis 40 Gew.-% carboxylgruppenhaltigen, ethylenisch ungesättigten Monomeren und/oder anderen ethylenisch ungesättigten, copolymerisierbaren Monomeren,

   wobei die Summe der Gewichtsanteile der Komponenten $a_1$ bis $a_4$ jeweils 100 Gew.-% beträgt, ein hydroxylgruppen- und ggf. carboxylgruppenhaltiges Copolymer hergestellt worden ist, indem

   1) mindestens 60 Gew.-% der Gesamtmenge der Komponente $a_1$ zusammen mit einem Teil der insgesamt einzusetzenden Lösungsmittelmenge vorgelegt werden,

   2) die Komponenten $a_2$ bis $a_4$ und der ggf. vorhandene Rest der Komponente $a_1$ innerhalb eines für alle Komponenten gleich langen Monomerenzugabezeitraumes so zudosiert werden, daß

   i) die pro Zeiteinheit zugegebene Menge der Komponente $a_1$ innerhalb des Monomerenzugabezeitraumes konstant bleibt oder abnimmt,

   ii) die pro Zeiteinheit zugegebene Menge der Komponenten $a_3$ und $a_4$ innerhalb des Monomerenzugabezeitraumes konstant bleibt und

   iii) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 bis 40 Gew.-% und innerhalb des letzten Drittels 35 bis 60 Gew.-% der Gesamtmenge der Komponente $a_2$ beträgt, wobei die Summe der Zugabemengen im 1., 2. und 3. Drittel jeweils 100 Gew. -% beträgt,

   B) ggf. das in der Stufe A erhaltene Copolymer mit Carbonsäureanhyriden umgesetzt worden ist, wobei die Menge an eingesetzten Carbonsäureanhydriden so gewählt wird, daß das entstehende Copolymer eine Säurezahl von mehr als 30 bis 150 mg KOH/g aufweist.

2. Carboxylgruppenhaltiges Copolymer nach Anspruch 1, dadurch gekennzeichnet, daß es eine Säurezahl von mehr als 30 bis 90 mg KOH/g aufweist.

3. Carboxylgruppenhaltiges Copolymer nach Anspruch 1 oder 2, dadurch gekennzeichnet, daß das in Stufe A hergestelle Copolymer eine OH-Zahl von 30 bis 200 mg KOH/g aufweist und daß dieses Copolymer mit Carbonsäureanhydriden zu dem carboxylgruppenhaltigen Copolymer B umgesetzt worden ist.

4. Carboxylgruppenhaltiges Copolymer nach Anspruch 3, dadurch gekennzeichnet, daß das in Stufe A hergestellte Copolymer eine OH-Zahl von 70 bis 150 mg KOH/g aufweist und herstellbar ist unter Verwendung von 15 bis 35 Gew.-% der Komponente $a_3$.

5. Carboxylgruppenhaltiges Copolymer nach einem der Ansprüche 1 bis 4, dadurch gekennzeichnet, daß das carboxylgruppenhaltige Copolymer eine OH-Zahl von 0 bis 60 mg KOH/g und eine Aminzahl von 0 bis 50 mg KOH/g aufweist.

6. Carboxylgruppenhaltiges Copolymer nach einem der Ansprüche 1 bis 5, dadurch gekennzeichnet, daß es herstellbar ist unter Verwendung von 10 bis 19 Gew. -% eines oder mehrerer Vinylester von Monocarbonsäuren.

7. Carboxylgruppenhaltiges Copolymer nach einem der Ansprüche 1 bis 6, dadurch gekennzeichnet, daß als Komponente $a_1$ ein oder mehrere Vinylester von in $\alpha$-Stellung verzweigten aliphatischen Monocarbonsäuren mit 5 bis 15 C-Atomen je Molekül eingesetzt worden sind.

8. Carboxylgruppenhaltiges Copolymer nach einem der Ansprüche 1 bis 7, dadurch gekennzeichnet, daß als Komponente $a_1$ ein oder mehrere Vinylester von gesättigten aliphatischen Monocarbonsäuren mit 9 bis 11 C-Atomen, die am $\alpha$-C-Atom verzweigt sind, eingesetzt worden sind.

9. Carboxylgruppenhaltiges Copolymer nach einem der Ansprüche 1 bis 8, dadurch gekennzeichnet, daß das carboxylgruppenhaltige Copolymer eine Aminzahl von 10 bis 40 mg KOH/g aufweist.

10. Verfahren zur Herstellung der carboxylgruppenhaltigen Copolymere nach einem der Ansprüche 1 bis 9, dadurch gekennzeichnet, daß
   A) die Monomeren $a_1$ bis $a_4$ unter Verwendung von Polymerisationsinitiatoren bei Temperaturen von 130 bis 200°C zu einem hydroxyl- und ggf. carboxylgruppenhaltigen Copolymer umgesetzt werden, wobei
      I. mindestens 60 Gew.-% der Gesamtmenge der Komponente $a_1$ zusammen mit einem Teil der insgesamt einzusetzenden Lösungsmittelmenge vorgelegt werden,
      II. die Komponenten $a_2$ bis $a_4$ und der ggf. vorhandene Rest der Komponente $a_1$ innerhalb eines für alle Komponenten gleich langen Monomerenzugabezeitraumes so zudosiert werden, daß
      1) die pro Zeiteinheit zugegebene Menge der Komponente $a_1$ innerhalb des Monomerenzugabezeitraumes konstant bleibt oder abnimmt,
      2) die pro Zeiteinheit zugegebene Menge der Komponenten $a_3$ und $a_4$ innerhalb des Monomerenzugabezeitraumes konstant bleibt und
      3) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 bis 40 Gew.-% und innerhalb des letzten Drittels 35 bis 60 Gew.-% der Gesamtmenge der Komponenten $a_2$ beträgt, wobei die Summe der Zugabemengen im 1., 2. und 3. Drittel 100 Gew.-% beträgt und
   B) ggf. das in der Stufe A erhaltene Copolymer mit Carbonsäureanhyriden umgesetzt wird, wobei die Menge an eingesetzten Carbonsäureanhydriden so gewählt wird, daß das entstehende Copolymer eine Säurezahl von mehr als 30 bis 150 mg KOH/g aufweist.

11. Verfahren nach Anspruch 10, dadurch gekennzeichnet, daß 100 Gew.-% der Gesamtmenge der Komponente $a_1$ vorgelegt werden.

12. Verfahren nach Anspruch 10 oder 11, dadurch gekennzeichnet, daß die Monomeren bei Temperaturen von 150 bis 180°C polymerisiert werden.

13. Beschichtungsmittel, dadurch gekennzeichnet, daß es das carboxylgruppenhaltige Copolymer nach einem der Ansprüche 1 bis 9 als Bindemittel enthält.

14. Beschichtungsmittel nach Anspruch 13, dadurch gekennzeichnet, daß es Epoxidverbindungen mit mindestens 2 Epoxidgruppen pro Molekül als Härter enthält.

15. Verwendung der carboxylgruppenhaltigen Copolymere nach einem der Ansprüche 1 bis 9 als Bindemittel in Klarlacken oder pigmentierten Decklacken.

16. Verwendung der carboxylgruppenhaltigen Copolymere nach einem der Ansprüche 1 bis 9 als Bindemittel in Beschichtungsmitteln für die Autoreparaturlackierung.

17. Verwendung der Beschichtungsmittel nach Anspruch 13 oder 14 als Grundierung oder Füllermaterial.

## Claims

1. Copolymers containing carboxyl groups and having an acid number of more than 30 up to 150 mg of KOH/g and a number average molecular weight of 2000 to 8000, characterized in that they can be prepared by
   A) preparing, by means of free-radical solution polymerization, using polymerization initiators, at temperatures from 130 to 200°C from
      $a_1$) 5 to 25 % by weight of one or more vinyl esters of monocarboxylic acids,
      $a_2$) 10 to 50 % by weight of one or more vinyl-aromatic hydrocarbons,
      $a_3$) 5 to 40 % by weight of one or more hydroxyalkyl esters of $\alpha,\beta$-unsaturated carboxylic acids, and

$a_4$) 0 to 40 % by weight of ethylenically unsaturated monomers containing carboxyl groups and/or other ethylenically unsaturated, copolymerizable monomers, the sum of the contents by weight of the components $a_1$ to $a_4$ being 100 % by weight in each case, a copolymer containing hydroxyl groups and, if appropriate, carboxyl groups, by

1) initially taking at least 60 % by weight of the total amount of the component $a_1$ together with a part of the total amount of solvent to be used,

2) metering in the components $a_2$ to $a_4$ and any remainder of the component $a_1$ which may be present within a monomer addition time of equal length for all the components at such a rate that

i) the amount of the component $a_1$ added per time unit remains constant or decreases within the monomer addition time,

ii) the amount of the components $a_3$ and $a_4$ added per time unit remains constant within the monomer addition time and

iii) the amount of the component $a_2$ added within the first third of the monomer addition time is 15 to 30 % by weight of the total amount of the component $a_2$, the amount added within the second third is 25 - 40 % by weight of the total amount of the component $a_2$ and the amount added within the last third is 35 - 60 % by weight of the total amount of the component $a_2$, the sum of the amounts added in the ist, 2nd and 3rd third being 100 % by weight in each case,

B) and, if appropriate reacting the copolymer obtained in stage A with carboxylic anhydrides, the amount of carboxylic anhydrides employed being so chosen that the resulting copolymer has an acid number of more than 30 up to 150 mg of KOH/g.

**2.** Copolymer containing carboxyl groups according to Claim 1, characterized in that it has an acid number of more than 30 up to 90 mg of KOH/g.

**3.** Copolymer containing carboxyl groups according to Claim 1 or 2, characterized in that the copolymer prepared in step A has an OH number of 30 to 200 mg of KOH/g and this copolymer has been reacted with carboxylic anhydrides to give the copolymer B containing carboxyl groups.

**4.** Copolymer containing carboxyl groups according to Claim 3, characterized in that the copolymer prepared in step A has an OH number of 70 to 150 mg of KOH/g and can be prepared using 15 to 35 % by weight of component $a_3$.

**5.** Copolymer containing carboxyl groups according to any of Claims 1 to 4, characterized in that the copolymer containing carboxyl groups has an OH number of 0 to 60 mg of KOH/g and an amine number of 0 to 50 mg of KOH/g.

**6.** Copolymer containing carboxyl groups according to any of Claims 1 to 5, characterized in that it can be prepared by using 10 to 19 % by weight of one or more vinyl esters of monocarboxylic acids.

**7.** Copolymer containing carboxyl groups according to any of Claims 1 to 6, characterized in that one or more vinyl esters of aliphatic monocarboxylic acids branched in the $\alpha$-position and having 5 to 15 carbon atoms per molecule have been used as component $a_1$.

**8.** Copolymer containing carboxyl groups according to any of Claims 1 to 7, characterized in that one or more vinyl esters of saturated aliphatic monocarboxylic acids which have 9 to 11 C atoms and are branched at the $\alpha$-C atom have been employed as the component $a_1$.

**9.** Copolymer containing carboxyl groups according to any of Claims 1 to 8, characterized in that the copolymer containing carboxyl groups has an amine number of 10 to 40 mg of KOH/g.

**10.** Process for preparing a copolymer containing carboxyl groups according to any of Claims 1 to 9, characterized in that

A) the monomers $a_1$ to $a_4$ are reacted, using polymerization initiators, at temperatures from 130 to 200°C to give a copolymer containing hydroxyl groups and, if appropriate, carboxyl groups, by

I. initially taking at least 60 % by weight of the total amount of the component $a_1$ together with a part of the total amount of solvent to be used,

II. metering in the components $a_2$ to $a_4$ and any remainder of the component $a_1$ which may be present within a monomer addition time of equal length for all the components at such a rate that

1) the amount of the component $a_1$ added per time unit remains constant or decreases within the

monomer addition time,

2) the amount of the components $a_3$ and $a_4$ added per time unit remains constant within the monomer addition time and

3) the amount of the component $a_2$ added within the first third of the monomer addition time is 15 to 30 % by weight of the total amount of the component $a_2$, the amount added within the second third is 25 - 40 % by weight of the total amount of the component $a_2$ and the amount added within the last third is 35 - 60 % by weight of the total amount of the component $a_2$, the sum of the amounts added in the 1st, 2nd and 3rd third being 100 % by weight,

B) and, if appropriate reacting the copolymer obtained in stage A with carboxylic anhydrides, the amount of carboxylic anhydrides employed being so chosen that the resulting copolymer has an acid number of more than 30 up to 150 mg of KOH/g.

**11.** Process according to Claim 10, characterized in that 100 % by weight of the total amount of component $a_1$ is initially taken.

**12.** Process according to Claim 10 or 11, characterized in that the monomers are polymerised at temperatures of 150 to 180°C.

**13.** Coating agent, characterized in that it contains, as the binder, the copolymer containing carboxyl groups according to any one of Claims 1 to 9.

**14.** Coating agent according to Claim 13, characterized in that it contains, as the curing agent, epoxide compounds having at least 2 epoxide groups per molecule.

**15.** Use of the copolymers containing carboxyl groups according to any of Claims 1 to 9 as binders in clearcoats or pigmented topcoats.

**16.** Use of the copolymers containing carboxyl groups according to any of Claims 1 to 9 as binders in coating agents for automobile refinishing.

**17.** Use of the coating agent according to Claim 13 or 14 as priming coat or filler.

## Revendications

**1.** Copolymères contenant des groupes carboxyles ayant un indice d'acide de plus de 30 et jusqu'à 150 mg de KOH/g et un poids moléculaire moyen de 2000 à 8000, qui sont caractérisés en ce qu'ils peuvent être fabriqués, en faisant que

A) au moyen d'une polymérisation radicalaire en solution, en utilisant des amorceurs de polymérisation à des températures de 130 à 200°C, contenant

$a_1$) 5 à 25 % en poids d'un ou de plusieurs esters vinyliques d'acides monocarboxyliques,

$a_2$) 10 à 50 % en poids d'un ou de plusieurs hydrocarbures aromatiques vinyliques,

$a_3$) 5 à 40 % en poids d'un ou plusieurs esters hydroxyalkyliques d'acides carboxyliques $\alpha$, $\beta$-insaturée,

$a_4$) 0 à 40 % en poids de monomères insaturés éthyléniques, contenant des groupes carboxyles et/ou d'autres monomères insaturés éthyléniques et copolymérisables,

dans laquelle le total des proportions en poids des composants $a_1$ à $a_4$ s'élève chaque fois à 100 % en poids, un copolymère contenant des groupes hydroxyles et le cas échéant des groupes carboxyles, est produit en

1) introduisant conjointement au moins 60 % en poids de la quantité totale du composant $a_1$ avec une partie de la quantité totale de solvant à introduire,

2) ajoutant les composants $a_2$ à $a_4$ et le résidu éventuellement présent du composant $a_1$ par portions pendant une période d'addition des monomères également longue pour tous les composants, de telle sorte que

i) la quantité de composant $a_1$ introduite par unité de temps reste constante ou décroît pendant la période d'addition des monomères,

ii) la quantité des composants $a_3$ et $a_4$ introduite par unité de temps reste constante pendant la période d'addition des monomères et

iii) la quantité de composant $a_2$ introduite pendant le premier tiers de la période d'addition des monomères représente 15 - 30 % en poids de la quantité totale du composant $a_2$, celle introduite pendant le second tiers représente 25 - 40 % en poids et celle introduite pendant le troisième tiers représente 35 - 60 % en poids de la quantité totale du composant $a_2$, auquel cas le total des quantités d'addition dans le 1er, le 2e et le 3e tiers s'élève chaque fois à 100 % en poids,

B) le cas échéant le copolymère obtenu à l'étape A est mis en réaction avec des anhydrides d'acides carboxyliques, auquel cas la quantité d'anhydrides d'acides carboxyliques introduits est choisie de telle sorte que le copolymère ainsi obtenu présente un indice d'acide de plus de 30 et jusqu'à 150 mg de KOH/g.

**2.** Copolymère contenant des groupes carboxyles selon la revendication 1, caractérisé en ce qu'il présente un indice d'acide de plus de 30 et jusqu'à 90 mg de KOH/g.

**3.** Copolymère contenant des groupes carboxyles selon la revendication 1 ou 2, caractérisé en ce que le copolymère fabriqué a l'étape A présente un indice d'OH de 30 à 200 mg de KOH/g et que ce copolymère entre en réaction avec des anhydrides d'acides carboxyliques pour donner le copolymère B contenant des groupes carboxyliques.

**4.** Copolymère contenant des groupes carboxyles selon la revendication 3, caractérisé en ce que le copolymère fabriqué à l'étape A présente un indice d'OH de 70 à 150 mg de KOH/g et qu'on peut le fabriquer en utilisant 15 à 35 % en poids du composant $a_3$.

**5.** Copolymère contenant des groupes carboxyles selon l'une quelconque des revendications 1 à 4, caractérisé en ce que le copolymère contenant des groupes carboxyles présente un indice d'OH de 0 à 60 mg de KOH/g et un indice d'amine de 0 à 50 mg de KOH/g.

**6.** Copolymère contenant des groupes carboxyles selon l'une quelconque des revendications 1 à 5, caractérisé en ce qu'on peut le fabriquer en utilisant 10 à 19 % en poids d'un ou de plusieurs esters vinyliques d'acides monocarboxyliques.

**7.** Copolymère contenant des groupes carboxyles selon l'une quelconque des revendications 1 à 6, caractérisé en ce qu'en tant que composant $a_1$, on a utilisé un ou plusieurs esters vinyliques d'acides monocarboxyliques aliphatiques ramifiés en position a et ayant de 5 à 15 atomes de carbone par molécule.

**8.** Copolymère contenant des groupes carboxyles selon l'une quelconque des revendications 1 à 7, caractérisé en ce qu'en tant que composant $a_1$, on a utilisé un ou plusieurs esters vinyliques d'acides monocarboxyliques aliphatiques saturés, ayant de 9 à 11 atomes de carbone et qui sont ramifiés en $\alpha$ sur l'atome de carbone.

**9.** Copolymère contenant des groupes carboxyles selon l'une quelconque des revendications 1 à 8, caractérisé en ce que le copolymère contenant des groupes carboxyles présente un indice d'amine de 10 à 40 mg de KOH/g.

**10.** Procédé pour la fabrication de copolymères contenant des groupes carboxyles selon l'une quelconque des revendications 1 à 9, caractérisé en ce que

A) les monomères $a_1$ à $a_4$ sont mis en réaction en présence d'amorceurs de polymérisation à des températures de 130 à 200°C pour donner un copolymère contenant des groupes hydroxyles et le cas échéant des groupes carboxyles, auquel cas

I. au moins 60 % en poids de la quantité totale du composant $a_1$ sont introduits ensemble avec une partie de la quantité totale de solvant à introduire,

II. les composants $a_3$ à $a_4$ et le résidu éventuellement présent du composant $a_1$ sont ajoutés par portions pendant une période d'addition des monomères également longue pour tous les composants, de telle sorte que

1) la quantité de composant $a_1$ introduite par unité de temps reste constante ou décroît pendant la période d'addition des monomères,

2) la quantité des composants $a_3$ et $a_4$ introduite par unité de temps reste constante pendant la période d'addition des monomères et

3) la quantité de composant $a_2$ introduite pendant le premier tiers de la période d'addition des monomères représente 15 - 30 % en poids de la quantité totale du composant $a_2$, celle introduite pendant le second tiers représente 25 - 40 % en poids et celle introduite pendant le troisième tiers représente 35 - 60 % en poids de la quantité totale du composant $a_2$, auquel cas le total des quantités d'addition dans le 1er, le 2e et le 3e tiers s'élève chaque fois à 100 % en poids,

B) le cas échéant le copolymère obtenu à l'étape A est mis en réaction avec des anhydrides d'acides carboxyliques, auquel cas la quantité d'anhydrides d'acides carboxyliques introduits est choisie de telle sorte que le copolymère ainsi obtenu présente un indice d'acide de plus de 30 et jusqu'à 150 mg de KOH/g.

**11.** Procédé selon la revendication 10, caractérisé en ce qu'on introduit 100 % en poids de la quantité totale de composant $a_1$.

**12.** Procédé selon l'une quelconque des revendications 10 ou 11, caractérisé en ce que les monomères sont polymérisés à des températures de 150 à 180°C.

**13.** Matière d'enduction, caractérisée en ce qu'elle contient en tant que liant le copolymère contenant des groupes carboxyles selon l'une quelconque des revendications 1 à 9.

**14.** Matière d'enduction selon la revendication 13, caractérisée en ce qu'elle contient des composés époxy ayant au moins 2 groupes époxydes par molécule en tant que durcisseur.

**15.** Utilisation des copolymères contenant des groupes carboxyles selon l'une quelconque des revendications 1 à 9, en tant que liant dans des vernis clairs ou des vernis de finition pigmentés.

**16.** Utilisation des copolymères contenant des groupes carboxyles selon l'une quelconque des revendications 1 à 9, en tant que liant dans des matières d'enduction pour les peintures de réparation automobile.

**17.** Utilisation des matières d'enduction selon la revendication 13 ou 14 en tant que couche de fond ou matière de charge.